# EUROPEAN PATENT APPLICATION

(11) **EP 1 073 028 A2**
(43) Date of publication of application: **31.01.2001**
(21) Application number: 00202685.4
(22) Date of filing: 28.07.2000
(51) Int. Cl.: G09B 5/06

(54) **Multimedia laboratory**

(30) Priority: 28.07.1999 BE 9900514
(71) Applicant: Cyberexcite Willemse GCV, 3090 Overijse (BE)
(72) Inventor: Willemse, Huib, 3090 Overijse (BE)

(57) **Abstract**

Up to now, any one computer can only be used by one or at the maximum two users. The result of this situation is a minimal use of the computer for real teaching or for group interactive situations. As a result, very few IT software directs itself to this type of use. E.g. most all software programmes available for teaching (computer use, languages etc.) are for self-instruction. Yet, those programmes which are available and even programmes which are not destined for group use, show the real need for this type of group instruction and the internet already offers activities (learning as well as entertainment) which can even be better pursued in group than alone.

The use of only one computer for an entire group to receive instruction or entertainment also offers interesting possibilities in the field of investment for a complete teaching or entertainment system.

The multimedia laboratory combines a number of existing or new elements (multi-media, video, internet, computer, projector/screen/monitor) into one integrated system, via connections and switches located in a central switchbox. Via this central switchbox signals emitted by a computer, video etc. can be heard on a central set of speakers and watched on a central screen, monitor etc., *and can also be activated by each member of a complete group and by the group leader*, via switches. The results vof each individual action can then again be heard and seen by all the group members who can each act again etc. The system is software-independent, can be used with a projector + screen but also with e.g. a tv-screen or a monitor.

Elements, such as a computer (1), speakers (2), a projector (3), a screen (4), are all connected to form, via a central switchbox (7) a new, completely integrated system whereby each participant from a group of participants (8) and a group leader (6), whether or not possibly equipped with e.g. a microphone or a workpad etc. (6B) can manipulate all sorts of IT software, independently of the type of software used, by the use of several elements of a workplace (9), such as e.g. but not necessarily limited to a mouse, a keyboard etc., connected to the central switchbox (7) either by cable or by radiofrequency (10) and whereby this only one computer (1) will be needed to show or let be heard the actions of either the group leader (6) or any of the participants (8), on the central screen (4), via the projector (3) and whereby any other group member/leader can in turn react to what has been acted out. This concept being totally independent of the elements used to form the integrated total, inclusive of the form of the central switchbox (7) with which each of the participants/the leader can be switched into possible action and independent of the form of the locality and/or the worktable/-bench (9B) etc. The same system can work without a projector (3) for showing the actions of the group leader (6) or the participants (8) on a television screen or a monitor (4) and, via video-conferencing, at geographical distances, with either "real" or "virtual" groups.

All possible current and future forms whitch a central switchbox (7) might take and all possible current and future ways in which the switches could be operated are part of the concept of the invention.

## Description

This invention combines a number of existing modern techniques (such as: video, computer, multimedia, infrared remote control, internet, video-conferencing) into a new totality, by the placement and use of a number of implements in a new way and by the placement of a number of switches between various implements and by possibly adding one or more new implements, so that it becomes possible to switch from one implement to another, in order to create a learning or entertainment environment ("laboratory") in which all the implements combined provide a filly integrated and relatively low-cost system in which multimedia (cd-roms, internet) can be used, possibly also in combination with "classical" means such as blackboards and white boards, books, worksheets etc., by a group of several people at once.

The use of multimedia and the internet, be it for teaching purposes such as computer lessons (e.g.: familiarity with and the use of Windows, Word, Excel, Corel Draw, internet, etc.), or other types of lessons such as languages, technical lessons etc., or be it for entertainment purposes, is steadily growing and so is the demand for this use of IT.

### However, until now all these lessons and programmes can only by applied with the use of one computer PER individual user, each user being individually located behind his or her computer.

There are several disadvantages to this :

### ■ 1. For TEACHING - the situation of the teacher :

The teacher is forced to move from individual computer to individual computer in order to explain and answer questions. In the process the teacher looses his or her grip on the group and his or her capability to properly structure the lessons. Often the teacher will not be more than a sort of "problem solver", without even getting to the stage of really teaching and there even have been instances where, while the teacher is involved with one individual pupil, the others will "fumble around" in such a way as to even block their individual system. This renders effective, *real teaching* virtually impossible. Also, the same subject may have to be "taught" over and over again, at each individual workspot.

### ■ 2. For TEACHING - the method :

Because of the way in which a number of individual computers must be placed into a room, this type of "teaching" blocks a practical, simultaneous and integrated use of other means of learning such as e.g. television programmes, video, the "old" black or white board, overhead projection and even (for lack of space on the individual work desks) of books, worksheets etc.

### ■ 3. For TEACHING - the situation of the pupil :

Each pupil works separately and in fact in isolation. This makes it impossible for them to learn from each others' examples and mistakes. For some forms of teaching (e.g. languages) this relative isolation is even contrary to the nature of the subject taught (i.e., in the case of a language : communication). "Communication" with only a computer is in these instances a meagre surrogate and will probably (perhaps even luckily so) remain so for quite a while.

### ■ 4. For ENTERTAINMENT :

Many people still prefer entertainment ***together***, participating in a *group*, rather than being alone. Although, because of the fact that up to now it is only possible to handle only one individual computer per person, almost all available games etc. on cd-rom are for only one (or maximally two) players there are as a matter of fact many internet sites nowadays which offer activities that are extremely suitable for doing together, by group.(Social) group participation increases fun and involvement and, as a side-effect, reduces "computer fear".

### ■ 5. The COST FACTOR :

Only one (or maximally two) computer(s) per individual user asks for a substantial capital investment, for a comparatively limited use (e.g. a school of 300 pupils with 10 computers which is open 30 lesson hours per week, can have each student work maximally one hour per week on the computer, at constant use). Also in most cases one licence per computer of any programme used must be bought, which limits the use of many programmes and stresses the organisation's financial capacity to buy programmes.

Therefore, although computers and IT are now already for quite some time available, also to the general public and at a fairly low cost, the use of these new techniques remains limited to all instances where only one or maximally two people can participate and therefore remains limited as far as real teaching or social relevance is concerned. This in turn creates a lack of programmes available for multi-users (e.g.: almost all multimedia language teaching programmes are for self-instruction).

The invention solves this problem, by the use (certainly for the time being) of existing techniques (later additions to the system, see hereunder). It accomplishes this by coupling various existing systems via cables and having them "communicate" with each other via switches, in one and the same integrated total system. Now, the - possible - leader of the group can communicate everything he or she does to all other members of the group, via one central screen, and so can each participant in the group - at the initiative of the "leader" - resulting in maximum involvement and maximum learning from each other, as members of the group. A central switchbox connects various hardware outlets (such as - but not limited to - mice, keyboards, microphones etc.) with one central computer, which in turn sends the signals produced by these outlets in any given software programme, to a screen (e.g.: a projector, a monitor or a tv-screen). The system is completely software-independent. For extensive description and drawings : see hereunder.

Firstly will ALL teaching and social disadvantages connected with the current "one-computer-per-user" system, as mentioned above, be solved by this new "group user" system. As an additional result, the use of modern IT for teaching and group use purposes can be increased and resistance e.g. by teachers to these modern techniques can be greatly reduced, as well as user hesitance towards modern IT.

Secondly the costs will be greatly reduced : only one computer per group and only one licence per computer per programme. For cost purposes the use of a tv-screen or a good quality monitor instead of a projector is a viable alternative. In that case the total investment can even be under the cost of three individual computers, whereas up to very large groups can share the system,

The system can also be used for videoconferencing *and the patent would be inclusive of this use*, i.e.: when coupled to video conferencing, a "leader" of a virtual "group" can from a distance show his instructions and/or actions to the members of the group on various individual screens on the various locations of one or more individual group members and can have each member participate, in turn showing the actions of the group member concerned, to all the other members of the group. This applies to learning purposes (e.g.: foreign language learning to virtual "groups", from a distance) as well as to entertainment (e.g.: simultaneous chess matches, where each of the distant participants' moves as well as the moves of the chessmaster are shown on a screen (tv-screen, monitor or projector screen) which is visible to a real or virtual group, located at a distance and where the chessmaster can control - using the switches - which of the participants puts a move).

The system has these past two years been extensively tested and has proven to be very practically usable, in groups of all ages.

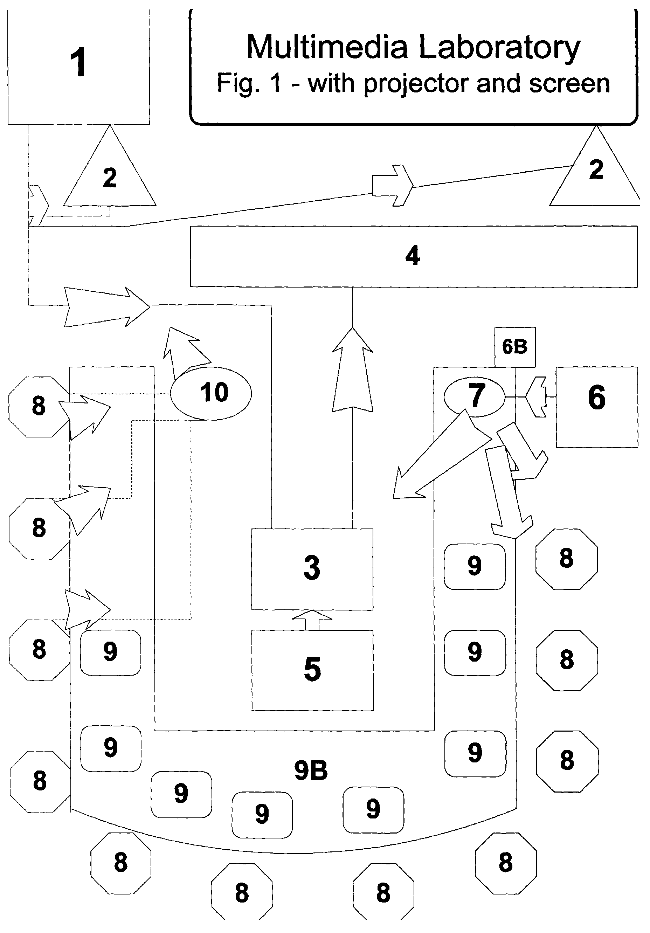

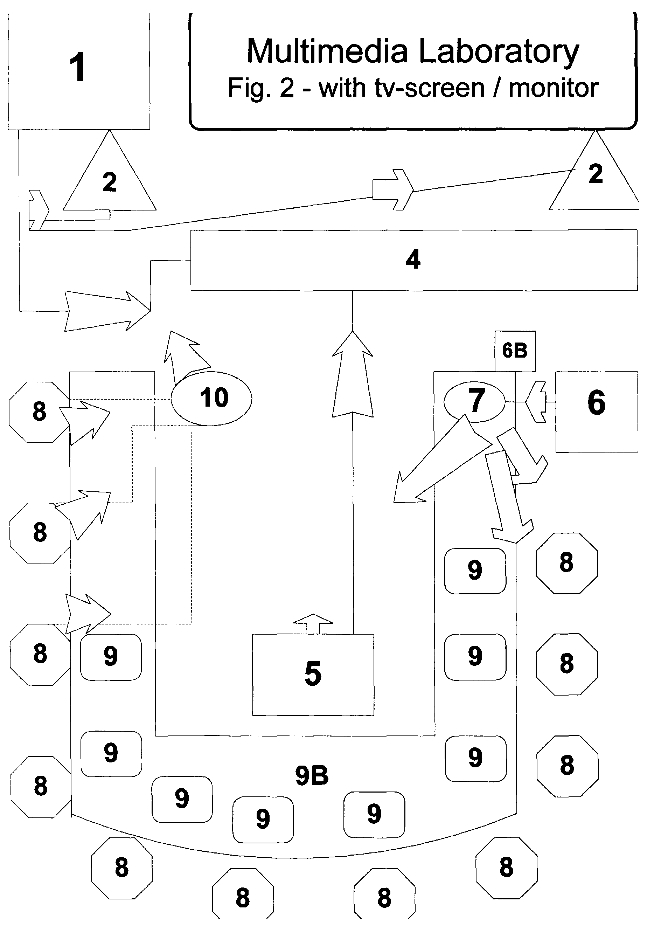

Figures 1 and 2 show examples of the practical carrying out of the invention.

### Figure 1 : example with projector en projection screen ("real" group).

The drawing shows the various parts of the system, the connections and the switches, as well as the places of the group leader. After all elements have been coupled, inclusive of the ***central switchbox*** **(7)**, the communication process is as follows :
1. ***The computer (1)*** - be it with (any applicable) multimedia cd-rom, or connected to the internet, or just using a programme on the hard disk of the computer, or connected via video-conferencing (N.B.: the system is completely software-independent), sends a signal to ***the speakers (2)*** and to ***the projector (3)***.
2. ***The projector (3)*** projects to ***the screen (4)***. This happens when a computer is used (see phase 1 above), but also if e.g. a ***video projector***, or e.g. a ***slide projector*** or an ***overhead projector (5)*** would provide the image (N.B.: in that case any of these projectors would, for the sound, be directly connected to ***the speakers (2)***; this connection is not shown, in order not to "overcrowd" the drawing).
3. ***The leader (6)*** disposes, besides a ***workplace (9***, see point 4 hereunder) and possibly a switch to perhaps switch from e.g. a video to the computer (not shown in the drawing), also of ***the central switchbox (7)***, in order to switch (via the computer) from himself to ***the*** various ***participants (8)***, so that any chosen participant can accomplish the tasks which the leader requires to be accomplished, or anything else. The leader can also have a microphone available, or a writing pad, or a system to make connotations on a screen or an electronic whiteboard, etc. and each of these can, *via the central switchbox*, also be connected to the computer, and therefore to the screen and the speakers.
4. The chosen ***participant (8)*** also disposes of a ***workplace (9)***. The workplace should at least have a mouse and a keyboard, but can - again - have e.g. a writing pad and/or a microphone as well, or anything that can be connected, in turn, to the central switchbow. In this drawing, the various workplaces are positioned on a ***working table (9B)***.

The action by the participant will, via the central switchbox, be sent directly to the computer and from there to the screen and/or the speakers and will thus be visible and audible by all the participants and by the leader. (N.B.: This "flow" has only been indicated - by arrows - at three of the participants on the drawing and two participants lack a workplace although in reality all have a workplace; this is again for clarity of the drawing's sake; also: the number of participants is of course not limited by the number shown on the drawing, but this is in reality only limited by the number of connections offered on the central switchbox). After that, the leader could "take over" again, and so forth ans so on.

It is obvious that, besides the modem equipment mentioned above, each participant disposes of enough room to also be able to work with books, workbooks, noteblocs etc. if necessary and there even remains ample space for a cup of coffee etc. The leader may also have a black or white board etc., e.g. directly behind him or her or anywhere else in the room and this can also be videoconferenced. All of this is of course not shown on the drawing either. Additional note : the connection of each ***workplace (9)*** to ***the central switchbox (7)*** does not necessarily have to be via cable, but can also be done by ***radiofrequency (10)***; this is a somewhat more costly option, which however becomes more and more viable.

### Figure 2 : example with tv-screen / monitor ("real" group).

This application is almost identical to the first, except that now ***the computer (1)*** as well as - possibly **- *a video etc. (5)*** will be directly coupled to the ***screen or monitor (4)***, without a projector.

The screen or monitor may of course vary greatly, depending upon the necessities and the budget.

### Possibility 3 (not drawn) : videoconferencing with a "virtual" group.

Videoconferencing can take two forms: either from ("real") group to ("real") group and/or the leader, or the groups could be "virtual" e.i.: composed of participants who are physically geographically dispersed. In that case the leader would also use the central switchbox to switch from himself to members of the "group", in the same way as if the group would be in one room, and each participant could be each time be shown via a small camera. This does not change anything to the concept of the system as such. Note: in this instance, each ("virtual" group) participant could even again be a ("real") group.

The ways in which and the persons by whom the system can be used are, also because of the relatively low investment, very many :
1. PRIVATE AND PUBLIC INSTITUTIONS (for learning and entertainment)
2. SCHOOLS (learning)
3. COMPANIES (again learning and entertainment)
Therefore, the price to be paid for the invention (in the form of a licence), for the central switchbox and for the installation costs, can remain fairly low per individual installation (central switchbox: see page 5).

The central switchbox can, by its nature, vary greatly, from a simple "mechanical" device to a box with a printed card but which still basically works in a mechanical way, to a specially designed, completely digitally controlled unit. In the last instance, this unit can still be outside a computer, or can even form an integral part of it. The switches on the box can be controlled either by a mechanical switch or by a digitally controlled press-button, or by an "internal" computer button, to be shown on the (central or, in the case of "virtual" grouping, individual) screen(s). The buttons can be operated either by direct touch, or by use of a mouse or similar device, or even by voice. *All this does NOT change the basic concept of the invention itself*, and can even be subject of and material for future development (also see page 6, Claims).

## Claims

1. A multimedia laboratory (Fig. 1) for group educational and/or entertainment purposes, composed of either existing elements or new elements, such as a computer (1), speakers (2), a projector (3), a screen (4), all connected to form, via a central switchbox (7) a new, completely integrated system whereby each participant from a group of participants (8) and a group leader (6), whether or not possibly equipped with e.g. a microphone or a workpad etc. (6B) can manipulate all sorts of IT software, independently of the type of software used, by the use of several elements of a workplace (9), such as e.g. but not necessarily limited to a mouse, a keyboard etc., connected to the central switchbox (7) either by cable or by radiofrequency (10) and whereby this only one computer (I) will be needed to show or let be heard the actions of either the group leader (6) or any of the participants (8), on the central screen (4), via the projector (3) and whereby any other group member/leader can in turn react to what has been acted out. This concept being totally independent of the elements used to form the integrated total, inclusive of the form of the central switchbox (7) with which each of the participants/the leader can be switched into possible action and independent of the form of the locality and/or the worktable/-bench (9B) etc.

2. The same multimedia laboratory as claimed in claim 1, working without a projector (3) for showing the actions of the group leader (6) or the participants (8), but instead showing these actions on a television screen or a monitor (4).

3. The same multimedia laboratory as claimed in claims 1 and 2, working, via video-conferencing, at geographical distances, with either "real" or "virtual" groups.

4. All possible current and future forms whitch a central switchbox (7) might take and all possible current and future ways in which the switches could be operated.
